**Europäisches Patentamt**

**European Patent Office**

**Office européen des brevets**

(19)

(11) Publication number : **0 355 929 B1**

(12)

# EUROPEAN PATENT SPECIFICATION

(45) Date of publication of patent specification :
**11.11.92 Bulletin 92/46**

(51) Int. Cl.⁵ : **C10G 47/16, B01J 29/10**

(21) Application number : **89202130.4**

(22) Date of filing : **22.08.89**

(54) **Hydrocracking catalyst and use thereof in a hydrocracking process.**

(30) Priority : **26.08.88 GB 8820364**

(43) Date of publication of application :
**28.02.90 Bulletin 90/09**

(45) Publication of the grant of the patent :
**11.11.92 Bulletin 92/46**

(84) Designated Contracting States :
**BE CH DE ES FR GB IT LI NL SE**

(56) References cited :
**EP-A- 0 247 679**
**EP-A- 0 288 112**
**US-A- 4 459 426**

(73) Proprietor : **SHELL INTERNATIONALE
RESEARCH MAATSCHAPPIJ B.V.
Carel van Bylandtlaan 30
NL-2596 HR Den Haag (NL)**

(72) Inventor : **Gosselink, Johan Willem
Badhuisweg 3
NL-1031 CM Amsterdam (NL)**
Inventor : **Schaper, Hennie
Badhuisweg 3
NL-1031 CM Amsterdam (NL)**
Inventor : **Huizinga, Tom
Badhuisweg 3
NL-1031 CM Amsterdam (NL)**

## Description

The present invention relates to a hydrocracking catalyst and use thereof in a hydrocracking process.

Hydrocracking is a well-known process in which hydrocarbonaceous feedstocks are converted into products with a lower average boiling point by contacting the feedstock with a hydrocracking catalyst in the presence of hydrogen. From EP-A-0 247 679 it is known that it would be advantageous to crack selectively to middle distillates, having a boiling point of about 130 - 300 °C, and in particular to produce as little gas, i.e. $C_{1-4}$ hydrocarbons, as possible.

Hydrocracking catalysts usually comprise acidic sites to promote the scission of heavy hydrocarbon molecules and one or more hydrogenating components to promote the supply of hydrogen to the cracked molecules. Nowadays, hydrocracking catalysts frequently contain a crystalline aluminosilicate, in particular zeolite Y. In this respect reference is, for instance, made to the above-mentioned European patent specification wherein a hydrocracking process has been described in which use is made of a hydrocracking catalyst which comprises a modified zeolite Y base material with a unit cell size below 2.435 nm and at least one hydrogenation component of a Group VI metal and/or at least one hydrogenation component of a Group VIII metal. Further, from EP-A-0 288 122 a hydrocracking catalyst is known comprising a modified zeolite of the Y-type having a unit cell size between 2.421 nm and 2.465 nm and at least one hydrogenation component of a Group VI metal and/or at least one hydrogenation component of a Group VIII metal. The acidic sites on the aluminosilicate are the result of trivalent aluminium ions that occupy a tetrahedral position in the crystalline structure. In order to maintain electroneutrality, positive ions, such as protons when the zeolite is in its acidic form, are coordinated with the tetrahedrally coordinated aluminium ions. Hence, if no aluminium ions were present in the structure, there would not be any acidic sites and the crystalline structure would not be suitable as a component in a zeolitic hydrocracking catalyst.

The silica/alumina ratio in crystalline faujasite-type aluminosilicates can be determined by X-ray diffraction measurements. The relationship of Breck and Flanigen provides the most authoritative and suitable method for determining the silica/alumina ratio. The Breck and Flanigen relationship reads (see D.W. Breck, Zeolite Molecular Sieves, J.Wiley, New York, 1974, page 94):

$$a_o = \frac{192 \cdot b}{1 + R} + c,$$

wherein $a_o$ is the unit cell size, b is 0.00868 and c is 24.191, all expressed in Å, and R is the atomic Si/Al ratio. When the values for b and c have been substituted into the relationship it appears that

$$R = \frac{1.666}{a_o - 24.191} - 1$$

From this relationship it can be concluded that the minimal unit cell size is regarded as being 24.191 Å and that at this unit cell size the zeolite would not contain any aluminium and hence that any catalyst containing such a zeolite would not have any cracking activity.

Recently, it was announced that zeolites Y with a unit cell size well below the theoretical limits of 24.191 Å could be obtained by steaming and severe leaching of a zeolite Y in the ammonium form (see R. Thomasson, International Symposium on Innovation in Zeolite Materials Science, Nieuwpoort, Belgium, 13-17 September, 1987). It has now surprisingly been found that a hydrocracking catalyst containing such a zeolite does have a cracking activity and moreover, that the use of such a hydrocracking catalyst in a hydrocracking process yields hardly any gaseous products and shows an excellent selectivity towards middle distillates.

Accordingly, the present invention provides a hydrocracking catalyst comprising a zeolite Y base material and at least one hydrogenating component of a Group 8 metal and/or at least one hydrogenating component of a Group 6b metal, which zeolite Y base material has a unit cell size below 2.419 nm.

The present invention further relates to the use of such a catalyst in a hydrocracking process and to a process for the conversion of a hydrocarbonaceous feedstock into products with a lower average boiling point, comprising contacting the feedstock in the presence of hydrogen with a catalyst as described above, at elevated temperature and pressure.

The catalyst according to the invention comprises a zeolite Y base material with a unit cell size below the theoretical minimum. In the Symposium referred to above, it was claimed that there has been synthesised a zeolite with a unit cell size of 23.98 Å, i.e. 2.398 nm. Suitably the present catalysts comprise a zeolite Y base material with a unit cell size from 2.380 to 2.419 nm, in particular from 2.395 to 2.418 nm. Although it was expected that the present zeolites would not contain any aluminium, it was found that there was still some aluminium left in the structure. By, for example solid-state $^{27}$Al-NMR, it can be determined how much aluminium is present in the structure of the above-described zeolites Y. Preferably, the aluminium content in the structure of the zeolite base material is from 1 to 0.001 %wt, more preferably from 0.8 to 0.05 %wt, calculated on total zeolite Y base material. It will be appreciated that some more aluminium compounds may be present in the zeolite that is obtained as base material, but that these are not incorporated in the structure. The total amount of aluminium can easily be determined by elemental analysis.

Zeolite base material used in the present invention will have been stabilized, and generally will contain very little alkali metal ion, the amount thereof, calculated as alkali metal oxide, being in particular less than 0.4 %wt, based on total zeolite base material.

Catalysts according to the invention suitably further comprise a binder material to give the catalyst particles sufficient strength. Therefore the catalysts advantageously further comprise a refractory oxide. The refractory oxide has preferably been selected from the group consisting of alumina, silica, silica-alumina, zirconia, thoria, titania, magnesia and mixtures thereof. It is in particular preferred to use alumina as refractory oxide. Another preferred embodiment is to use a mixture of silica-alumina and alumina. The silica-alumina will then act not only as a binder material but also as an amorphous cracking component.

The amount of refractory oxide in the catalyst may vary within wide ranges. Suitably, the amount of refractory oxide is from 10 - 90 %wt, based on the total of zeolite Y base material and refractory oxide. More preferably, the amount of refractory oxide is from 15 - 50 %wt, based on the total of zeolite Y base material and refractory oxide. When a mixture of e.g. silica-alumina and alumina is used as refractory oxide the total amount of these materials will usually be above 50 %wt of the total of zeolite and refractory oxides.

The hydrogenating components on the hydrocracking catalysts are conveniently selected from nickel, cobalt, palladium and platinum as Group 8 metals and molybdenum and tungsten compounds as Group 6b metals and mixtures thereof. On the catalyst the group 8 metal is preferably present in an amount of 0.05 to 10 parts by weight (pbw), calculated as metal, per 100 pbw of total catalyst, and the group 6b metal is preferably present in an amount of 2 to 40 pbw, calculated as metal, per 100 pbw of total catalyst. When a noble Group 8 metal is used the amount is more preferably from 0.05 - 2 pbw; and when a non-noble metal is employed the amount thereof is more preferably from 2 - 10 pbw per 100 pbw of total catalyst. Especially the non-noble metals of Group 8 and the metals of Group 6b are suitably present in the catalyst according to the invention in their oxidic or sulphidic form.

The preparation methods for preparing the catalyst are known in the art. Suitable methods include ion-exchange, impregnation and co-mulling. The preparation generally involves also one or more drying and/or calcination steps either before or after the catalyst has been shaped.

Hydrocarbonaceous feedstocks that can be used in the present process include gas oils, vacuum gas oils, deasphalted oils, long residues, short residues, catalytically cracked cycle oils, thermally cracked gas oils and syncrudes, optionally originating from tar sands, shale oils, residue upgrading processes or biomass. Combinations of various hydrocarbonaceous feedstocks can also be employed. The hydrocarbonaceous feedstock will generally be such that a major part, say over 50 %wt, has a boiling point above 370 °C. The present process can be used with feedstocks containing nitrogen. Typical nitrogen contents are in the range of up to 5000 ppmw. Nitrogen contents may start from 50 ppmw. The feedstock will generally also comprise sulphur compounds. The sulphur content will usually be in the range of from 0.2 to 6 %wt.

As to the process conditions in the hydrocracking process, the temperature is preferably from 250 to 500 °C, in particular from 280 to 440 °C, the pressure from 30 to 300 bar, in particular from 40 to 170 bar, the space velocity from 0.1 to 10 kg/l/h, in particular from 0.3 to 2 kg/l/h, and the hydrogen/oil ratio from 100 to 5000 Nl/kg, in particular from 200 to 2000 Nl/kg.

The catalyst according to the present invention can be employed in any hydrocracking process, such as a single-stage hydrocracking process, e.g. under relatively mild conditions (pressure of 30 to 80 bar), a series-flow hydrocracking process, and a two-stage hydrocracking process.

The invention will further be elucidated by means of the following Examples.

EXAMPLE 1

A zeolite Y base material (157.9 g), with a loss on ignition of 24.0 %wt, having a unit cell size of 2.416 nm determined by X-ray diffraction (ASTM D-3942-80), and an aluminium content of 0.5 %wt, determined by $^{27}$Al-NMR, in the zeolite structure (supplied by Conteka BV), was mixed with 40.0 g hydrated alumina with a loss on ignition of 25.7 %wt. To the mixture 68.0 ml of an aqueous solution containing 5.78 g NiO in the form of nickel nitrate and 18.02 g of $WO_3$ in the form of ammonium metatungstate and 4.5 g of acetic acid, was added. After mulling the mixture obtained, it was extruded. The extrudates were dried at 120 °C for 2 hours and calcined at 500 °C for 2 hours. After the calcination, a catalyst was obtained with 2.6 %wt nickel and 8.2 %wt tungsten, calculated as metal on total catalyst. The weight ratio zeolite Y/alumina was 80/20.

3

EXAMPLE 2

The catalyst as described in Example 1, i.e. catalyst 1, was subjected to a hydrocracking experiment involving a vacuum gas oil with an initial boiling point of 205 °C, a 50 %wt boiling point of 428 °C, and a final boiling point of 598 °C. The catalyst was first subjected to a presulphiding step by heating the catalyst in a $H_2S/H_2$ atmosphere to 370 °C. Then the catalyst was tested in a 1:1 dilution with 0.2 mm SiC particles in a hydrogen atmosphere under the following operating conditions: a space velocity of 1.1 kg/l.h, a total pressure of 130 bar, a $H_2S$ partial pressure of 1.4 bar and a gas/feed ratio of 1,000 Nl/kg. The experiment was carried out in a once-through operation.

The catalyst performance was compared with a hydrocracking catalyst 2, prepared in the same manner as described in Example 1, but starting from a zeolite Y with a unit cell size of 2.433 nm (aluminium content in the zeolite structure 4.0 %wt). This catalyst 2 also contained 2.6 %wt nickel, 8.2 %wt tungsten and had a zeolite/alumina ratio of 80/20.

The catalysts were compared at two conversion levels: one level such that 50 %wt of the 300 °C$^+$ material was converted to products with lower boiling point and another level such that 70 %wt thereof was converted. The results of the experiments involving catalysts 1 and 2 are indicated in the Table below. In the Table, the "temperature required" means the temperature to obtain the desired conversion level.

### TABLE

| | 1 | 2 | 3 | 4 |
|---|---|---|---|---|
| Experiment No. | 1 | 2 | 3 | 4 |
| Catalyst No. | 1 | 1 | 2 | 2 |
| Conversion level, %wt | 50 | 70 | 50 | 70 |
| Distribution of 300 °C$^-$ product, %wt | | | | |
| $C_{1-4}$ | 4 | 6 | 5 | 6 |
| $C_5$-130 °C | 34 | 42 | 33 | 44 |
| 130 °C – 300 °C | 62 | 52 | 62 | 50 |
| Temperature required, °C | 332 | 343 | 315 | 325 |

From the above experiments it is apparent that the catalyst according to the present invention shows cracking activity and when used in a hydrocracking process yields either less gas (cf. experiments 1 and 3) or produces more middle distillates (cf. experiments 2 and 4) than the prior art catalyst.

## Claims

1. Hydrocracking catalyst comprising a zeolite Y base material and at least one hydrogenating component of a Group 8 metal and/or at least one hydrogenating component of a Group 6b metal, which zeolite Y base material has a unit cell size below 2.419 nm.

2. Catalyst according to claim 1, in which the zeolite Y base material has a unit cell size of 2.380 to 2.419 nm.

3. Catalyst according to claim 1 or 2, in which the zeolite Y base material has an aluminium content of 1 to 0.001 %wt, calculated on total zeolite Y base material.

4

4. Catalyst according to any one of claims 1-3, which further comprises a refractory oxide.

5. Catalyst according to claim 4, in which the refractory oxide has been selected from the group consisting of alumina, silica, silica-alumina, zirconia, thoria, titania, magnesia and mixtures thereof.

6. Catalyst according to claim 4 or 5, in which the amount of refractory oxide is from 10- 90 %wt, based on the total of zeolite Y base material and refractory oxide.

7. Catalyst according to any one of claims 1-6, in which the group 8 metal is nickel, cobalt, platinum, palladium or a mixture thereof.

8. Catalyst according to any one of claims 1-7, in which the group 6b metal is molybdenum, tungsten or a mixture thereof.

9. Catalyst according to any one of claims 1-8, in which the group 8 metal is present in an amount of 0.05 to 10 parts by weight (pbw), calculated as metal, per 100 pbw of total catalyst, and the group 6b metal is present in an amount of 2 to 40 pbw, calculated as metal, per 100 pbw of total catalyst.

10. Use of a catalyst according to any one of claims 1-9 in a hydrocracking process.

11. Process for the conversion of a hydrocarbonaceous feedstock into products with a lower average boiling point, comprising contacting the feedstock in the presence of hydrogen with a catalyst according to any one of claims 1-9, at elevated temperature and pressure.

12. Process according to claim 11, in which the temperature is from 250 to 500 °C, the hydrogen pressure is from 30 to 300 bar, the space velocity is from 0.1 to 10 kg/l.h and the hydrogen/feedstock ratio is from 100 to 5000 Nl/kg.

## Patentansprüche

1. Hydrocrack-Katalysator, umfassend ein Material auf der Basis eines Zeoliths Y und mindestens eine hydrierend wirkende Komponente eines Metalls der Gruppe 8 und /oder mindestens eine hydrierend wirkende Komponente eines Metalls der Gruppe 6b, welches Material auf der Basis von Zeolith Y eine Elementarzellengröße von weniger als 2,419 nm aufweist.

2. Katalysator nach Anspruch 1, in welchem das Material auf der Basis von Zeolith Y eine Elementarzellengröße von 2,380 bis 2,419 nm aufweist.

3. Katalysator nach Anspruch 1 oder 2, in welchem das Material auf der Basis des Zeoliths Y einen Aluminiumgehalt von 1 bis 0,001 Gewichtsprozent, bezogen auf das gesamte Material auf der Basis von Zeolith Y, aufweist.

4. Katalysator nach einem der Ansprüche 1 bis 3, welcher ferner ein feuerfestes Oxid enthält.

5. Katalysator nach Anspruch 4, in welchem das feuerfeste Oxid ausgewählt ist aus der Gruppe, bestehend aus Aluminiumoxid, Siliciumdioxid, Siliciumdioxid-Aluminiumoxid, Zirkonoxid, Thoriumoxid, Titanoxid, Magnesiumoxid und Mischungen davon.

6. Katalysator nach Anspruch 4 oder 5, in welchem die Menge an feuerfestem Oxid 10 bis 90 Gewichtsprozent, bezogen auf die Gesamtmenge an Material auf der Basis von Zeolith Y und feuerfestem Oxid, beträgt.

7. Katalysator nach einem der Ansprüche 1 bis 6, in welchem das Metall der Gruppe 8 Nickel, Kobalt, Platin, Palladium oder eine Mischung davon ist.

8. Katalysator nach einem der Ansprüche 1 bis 7, in welchem das Metall der Gruppe 6b Molybdän, Wolfram oder eine Mischung davon ist.

9. Katalysator nach einem der Ansprüche 1 bis 8, in welchem das Metall der Gruppe 8 in einer Menge von 0,05 bis 10 Gewichtsteilen, berechnet als Metall je 100 Gewichtsteile des Gesamtkatalysators, und das Metall der Gruppe 6b in einer Menge von 2 bis 40 Gewichtsteilen, berechnet als Metall je 100 Gewichtsteile Gesamtkatalysator, vorliegt.

10. Verwendung eines Katalysators nach einem der Ansprüche 1 bis 9 in einem Hydrocrack-Verfahren.

11. Verfahren zur Umwandlung eines kohlenwasserstoffhaltigen Ausgangsmaterials in Produkte mit einem niedrigeren durchschnittlichen Siedepunkt, umfassend das Kontaktieren des Ausgangsmaterials in Gegenwart von Wasserstoff mit einem Katalysator nach einem der Ansprüche 1 bis 9, bei erhöhter Temperatur und erhöhtem Druck.

12. Verfahren nach Anspruch 11, in welchem die Temperatur 250 bis 500°C, der Wasserstoffdruck 30 bis 300 bar, die Raumgeschwindigkeit 0,1 bis 10 kg/l.h und das Wasserstoff/Ausgangsmaterial-Verhältnis 100 bis 5000 Nl/kg betragen.

**Revendications**

1. Catalyseur d'hydrocraquage comprenant une substance de base de type zéolithe Y et au moins un composant d'hydrogénation d'un métal du groupe VIII et/ou au moins un composant d'hydrogénation d'un métal du groupe VIB, la substance de base de type zéolithe Y ayant une maille unitaire de dimension inférieure à 2,419 nm.

2. Catalyseur selon la revendication 1, dans lequel la substance de base de type zéolithe Y a une maille unitaire de dimension 2,380 à 2,419 nm.

3. Catalyseur selon la revendication 1 ou 2, dans lequel la substance de base de type zéolithe Y a une teneur en aluminium de 1 à 0,001%, calculée par rapport à la substance de base de type zéolithe Y totale.

4. Catalyseur selon l'une quelconque des revendications 1-3, qui comprend en outre un oxyde réfractaire.

5. Catalyseur selon la revendication 4, dans lequel l'oxyde réfractaire a été choisi dans le groupe constitué par l'alumine, la silice, la silice-alumine, la zirconia, l'oxyde de thorium, le dioxyde de titane, la magnésie et leurs mélanges.

6. Catalyseur selon la revendication 4 ou 5, dans lequel la quantité d'oxyde réfractaire est de 10-90% en poids, par rapport au total de la substance de base de type zéolithe Y et de l'oxyde réfractaire.

7. Catalyseur selon l'une quelconque des revendications 1-6, dans lequel le métal du groupe VIII est le nickel, le cobalt, le platine, le palladium ou un mélange de ceux-ci.

8. Catalyseur selon l'une quelconque des revendications 1-7, dans lequel le métal du groupe VIB est le molybdène, le tungstène ou un mélange de ceux-ci.

9. Catalyseur selon l'une quelconque des revendications 1-8, dans lequel le métal du groupe VIII est présent à raison de 0,05 à 10 parties en poids, calculé en métal, pour 100 parties en poids du catalyseur total, et le métal du groupe VIA est présent à raison de 2 à 40 parties en poids, calculé en métal, pour 100 parties en poids du catalyseur total.

10. Utilisation d'un catalyseur selon l'une quelconque des revendications 1-9 dans un procédé d'hydrocraquage.

11. Procédé pour transformer une charge d'hydrocarbures en produits ayant un point d'ébullition moyen inférieur, procédé comprenant la mise en contact de la charge, en présence d'hydrogène, avec un catalyseur selon l'une quelconque des revendications 1-9, à une température et sous une pression élevées.

12. Procédé selon la revendication 11, dans lequel la température est de 250 à 500°C, la pression d'hydrogène est de 30 à 300 bars, la vitesse spatiale est de 0,1 à 10 kg/l/h et le rapport hydrogène/huile de 100 à 5000 litres/kg (dans les conditions normales).